# EUROPEAN PATENT APPLICATION

(11) **EP 2 189 682 A1**
(43) Date of publication of application: **26.05.2010**
(21) Application number: 08829817.9
(22) Date of filing: 03.09.2008
(51) Int. Cl.: F16H 41/26

(54) **TORQUE CONVERTER**

(30) Priority: 03.09.2007 JP 2007228097
(71) Applicant: Toyota Jidosha Kabushiki Kaisha, Toyota-shi, Aichi 471-8571 (JP)
(72) Inventor: YAMASHITA, Toshiya, Toyota-shi Aichi 471-8571 (JP)
(74) Representative: TBK-Patent
(86) International application number: PCT/JP2008/065816
(87) International publication number: WO 2009/031556

(57) **Abstract**

A torque converter, which includes an impeller, a turbine, and a stator, is disclosed. The impeller receives torque and rotates about its axis. The turbine is coaxial with the impeller and arranged to be rotatable at a position facing toward the impeller. The stator is arranged between the impeller and the turbine and includes a stator blade, which regulates the flow of fluid contained between the impeller and the turbine from the turbine to the impeller. A torus is formed by the impeller, the turbine, and the stator. The fluid contained in the torus transmits torque between the impeller and the turbine. A torus inner-outer diameter ratio, which is the ratio of an inner diameter and an outer diameter of the torus, is set in a range of 0.55 to 0.68. An exit angle, which is an inclination angle of a portion of the stator blade facing toward the impeller relative to axes of the impeller and the turbine, is set in a range of 30° to 40°.

## Description

### TECHNICAL FIELD

The present invention relates to a torque converter.

### BACKGROUND ART

In a vehicle such as an automobile, a torque converter, which transmits torque, is arranged between the crankshaft of the engine and the input shaft of the transmission. Patent document 1 discloses one example of such a torque converter.

A torque converter includes an impeller, a turbine, and a stator. Torque received by the impeller rotates the impeller about its axis. The turbine, which is coaxial with the impeller, is rotatably arranged at a position facing toward the impeller. The stator, which is arranged between the impeller and the turbine, includes stator blades. Fluid contained in a torus (fluid operation chamber), which is formed by the impeller, turbine, and stator, transmits torque between the impeller and the turbine. The stator blades regulate the flow of the fluid from the turbine to the impeller.

Torque ratio is used as a parameter indicating the performance of a torque converter.
The torque ratio is the ratio of the torque acting on the turbine (output torque) and the torque received by the impeller (input torque). A higher torque ratio improves the torque converter performance.

Capacity coefficient is used as another parameter indicating the performance of a torque converter. In the following equation of "Te = C · NE²", "Te" represents the input torque of the torque converter (engine output torque) and "NE" represents the rotational speed of the impeller (input rotational speed). Further, "C" represents the capacity coefficient.

As apparent from the above equation, under the condition in which the input torque Te is constant, the input rotational speed increases more quickly as the capacity coefficient C decreases, and the input rotational speed NE increases more slowly as the capacity coefficient C increases. In other words, the input rotational speed NE may be held at a predetermined value with a smaller input torque Te as the capacity coefficient C decreases but requires a larger input torque Te as the capacity coefficient increases.

Accordingly, regardless of the engine displacement (output torque characteristics), to optimize the rising behavior of the input rotational speed NE relative to the input torque Te (engine output torque), the capacity coefficient C must be set in an optimal manner. Specifically, for engines of larger displacements that generate high output torques, the capacity coefficient C must be set to be larger. On the other hand, for engines of smaller displacements generating low output torques, the capacity coefficient C must be set to be smaller.

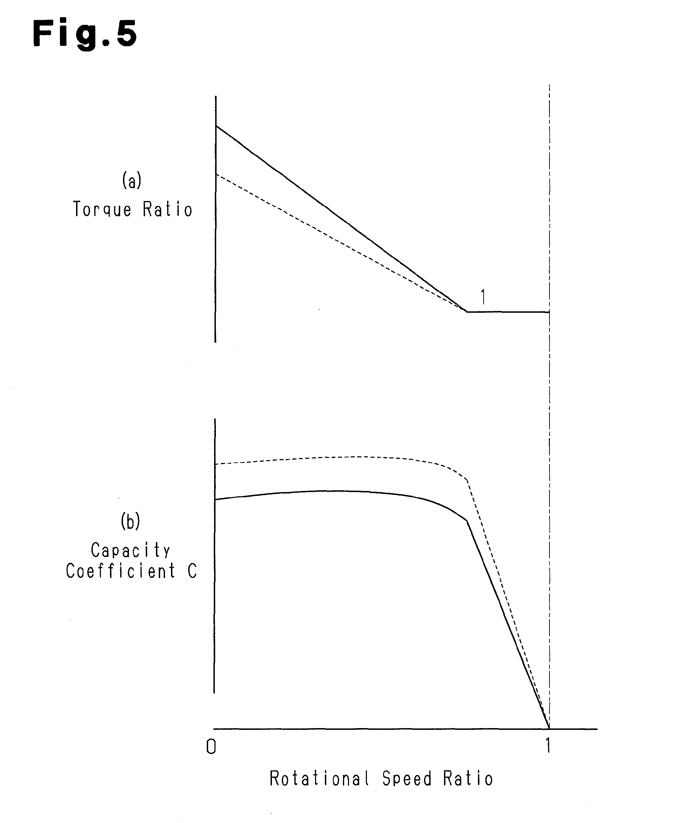

Fig. 5 shows how the torque ratio and capacity coefficient C vary relative to the rotational speed ratio, which is the ratio of the rotational speed of the turbine (output rotational speed) and the input rotational speed NE. The torque ratio and the capacity coefficient C (more precisely, their gradients) may be varied by adjusting the curved form of the impeller blades, which are formed on the impeller at portions facing toward the turbine. However, when, for example, setting the impeller blades to shift the torque ratio from the values plotted along the broken line to the values plotted along the solid line in Fig. 5(a), the capacity coefficient C decreases from the values plotted along the broken line to the values plotted along the solid line in Fig. 5(b). In other words, the capacity coefficient C decreases when increasing the torque ratio, and the torque ratio decreases when increasing the capacity coefficient C.

Hence, when adjusting the curved form of the impeller blades to vary the torque ratio and the capacity coefficient C, the torque ratio must be set to be as large as possible to obtain the optimal rising behavior for the input rotational speed NE when the input torque Te increases.

Enlargement of the torque converter improves performance, which includes the torque ratio and the capacity coefficient C. However, there is a limit to the space in which the torque converter may be installed. There is thus a demand for a torque converter that improves the performance without having to enlarge the torque converter.
[Patent Document 1] Japanese Laid-Open Patent Publication No. 2005-249146

### DISCLOSURE OF THE INVENTION

It is an object of the present invention to provide a torque converter that improves performance without being enlarged.

To achieve the above object, one aspect of the present invention is a torque converter including an impeller, a turbine, and a stator. The impeller receives torque and rotates about its axis. The turbine is coaxial with the impeller and arranged to be rotatable at a position facing toward the impeller. The stator is arranged between the impeller and the turbine and includes a stator blade, which regulates the flow of fluid contained between the impeller and the turbine from the turbine to the impeller. A torus is formed by the impeller, the turbine, and the stator. The fluid contained in the torus transmits torque between the impeller and the turbine. A torus inner-outer diameter ratio, which is the ratio of an inner diameter and an outer diameter of the torus, is set in a range of 0.55 to 0.68. An exit angle, which is an inclination angle of a portion of the stator blade facing toward the impeller relative to axes of the impeller and the turbine, is set in a range of 30° to 40°.

### BRIEF DESCRIPTION OF THE DRAWINGS

Fig. 1 is a cross-sectional view showing the internal structure of a torque converter according to one embodiment;
Fig. 2 is a schematic diagram showing the form of a stator blade of Fig. 1;
Fig. 3 is a graph showing how the torque ratio of the torque converter varies when a torus inner-outer diameter ratio varies;
Fig. 4 is graph showing how the capacity coefficient of the torque converter varies when the exit angle of the stator blade varies; and
Fig. 5 is a graph showing how the torque ratio and the capacity coefficient vary when the rotational speed ratio of the torque converter varies.

### BEST MODE FOR CARRYING OUT THE INVENTION

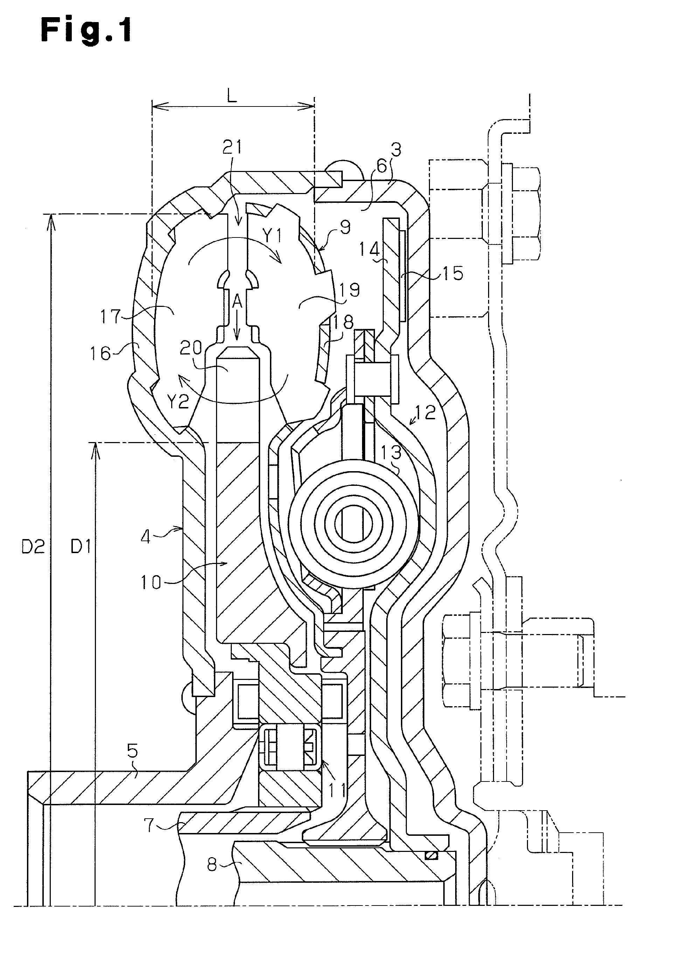

An embodiment of a torque converter according to the present invention as installed in an automobile will now be discussed with reference to Figs. 1 to 4.

Fig. 1 shows a torque converter including a front cover 3 and an impeller 4. The front cover 3 is connected to and integrally rotatable with a crankshaft, which is an engine output shaft. The impeller 4 is connected to and integrally rotatable with the front cover 3. The impeller 4 includes a cylindrical impeller hub 5. The rotational axis (center axis) of the impeller 4 lies along the rotational axis of the impeller hub 5. Rotation of the crankshaft integrally rotates the front cover 3 and the impeller 4 about the rotational axis of the impeller 4.

The front cover 3 and the impeller 4 define a fluid chamber 6, which is filled with hydraulic oil. A turbine 9 is arranged in the fluid chamber 6 at a position facing toward the impeller 4. A stator 10 is arranged between the turbine 9 and the impeller 4. A cylindrical inner race 7, which extends through the impeller hub 5, is arranged coaxially with the impeller 4. A one-way clutch 11 connects the stator 10 to the inner race 7. Due to the one-way clutch 11, the stator 10 is rotatable about the rotational axis only in the rotational direction of the turbine 9. The turbine 9 includes a turbine hub 8. The turbine hub 8, which extends through the inner race 7, is arranged coaxially with the impeller 4. The turbine hub 8 is connected to and integrally rotatable with an input shaft of a transmission. In the torque converter, the hydraulic oil contained between the impeller 4 and the turbine 9 transmits torque between the impeller 4 (engine side) and the turbine 9 (transmission side).

A lockup mechanism 12, which mechanically connects the impeller 4 and the turbine 9, is arranged between the front cover 3 and the turbine 9 in the fluid chamber 6. The lockup mechanism 12 includes a damper 13, a disk-shaped clutch plate 14, and a friction member 15. The clutch plate 14 is arranged parallel to and near the front cover 3. The damper 13 connects the clutch plate 14 to the turbine hub 8 so as to be integrally rotatable with the turbine hub 8. The friction member 15 is fixed to the clutch plate 14 facing toward the front cover 3.

Force generated by the pressure difference between the oil pressure acting on a portion between the plate 14 and the turbine 9 and the oil pressure acting on a portion between the plate 14 and the front cover 3 moves the clutch plate 14 and presses the friction member 15 against the front cover 3 or separates the friction member 15 from the front cover 3. An oil pressure circuit regulates the pressure difference by selectively supplying the portion between the plate 14 and the turbine 9 with hydraulic oil and the portion between the plate 14 and the front cover 3 with hydraulic oil. Movement of the clutch plate 14 pressing the friction member 15 against the front cover 3 mechanically connects the impeller 4 and the turbine 9. Movement of the clutch plate 14 separating the friction member 15 from the front cover 3 mechanically disconnects the impeller 4 and the turbine 9.

The impeller 4, the turbine 9, and the stator 10 will now be discussed in detail.

The impeller 4 includes an impeller shell 16, which includes a plurality of impeller blades 17 arranged at predetermined intervals in the rotational direction. The turbine 9, which is arranged at a position facing toward the impeller 4, includes a turbine shell 18, which includes a plurality of turbine blades 19 arranged at predetermined intervals in the rotational direction. The impeller blades 17 and the turbine blades 19 are arranged facing toward each other in a direction in which the rotational axes of the impeller hub 5 and the turbine hub 8 extend (lateral direction as viewed in the drawing).

The impeller 4 is rotated when receiving torque from the engine. As a result, the hydraulic oil contained between adjacent impeller blades 17 of the impeller shell 16 is forced by the blades 17 to flow toward the turbine 9 as indicated by the arrow Y1. The flow of hydraulic oil toward the turbine 9 is received by the turbine blades 19. This produces torque in the rotational direction acting on the turbine 9. The hydraulic oil from the impeller 4 that flows into between adjacent turbine blades 19 then flows toward between adjacent impeller blades 17 as indicated by the arrow Y2. Such flow of the hydraulic oil between the impeller 4 and the turbine 9 transmits torque between the impeller 4 and the turbine 9 with the hydraulic oil.

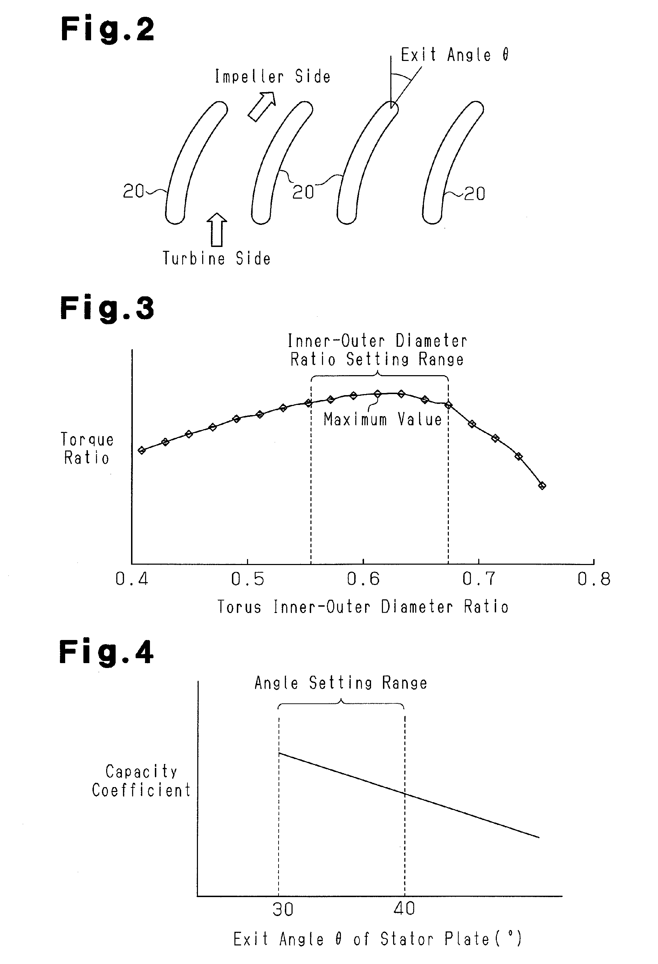

The stator 10, which is located between the impeller 4 and the turbine 9, includes a plurality of stator blades 20 arranged at predetermined intervals in the rotational direction. The stator blades 20 are arranged between the impeller blades 17 and the turbine blades 19. The stator blades 20 regulate the flow of hydraulic oil from the impeller 4 to the turbine 9. Portions of the stator blades 20 facing toward the impeller blades 17 are inclined in the rotational direction of the stator 10 relative to the direction in which the rotation axes of the impeller hub 5 and the turbine hub 8 extend (lateral direction as viewed in the drawing). Fig. 2 is a schematic diagram showing the form of the stator blade 20. The inclination angle of the portions of the stator blades 20 facing toward the impeller blades 17 will hereinafter be referred to as the exit angle θ of the stator blade 20.

As shown in Fig. 1, the impeller blade 17, the turbine blade 19, and the stator blade 20 form a torus (fluid operation chamber) 21. In Fig. 1, "D1" represents the inner diameter of the torus 21, namely, the torus inner diameter, and "D2" represents the outer diameter of the torus 21, namely, the torus outer diameter. Further, "L" represents the axial width of the torus 21, namely, the torus width, which is the width of the torus 21 in the direction in which the axes of the impeller hub 5 and the turbine hub 8 extend.

The torque converter has a significantly shortened axial length (length in the lateral direction of the drawing) and includes the lockup mechanism 12. This limits the space in the axial direction allowing for the formation of the torus 21. Accordingly, the torus 21 is a flat torus, the size of which is small in the axial direction. The torus 21 has a flatness rate, which is obtained from the ratio of the torus width K and the torus outer diameter D2 (L/D2). The flatness rate of the torus 21, or the above-described ratio (L/D2), is 0.2 or less, for example, "0.12".

There is a demand for a torque converter having improved performance, which includes the torque ratio and the capacity coefficient, without having to enlarge the torque converter. The setting of a torus inner-outer diameter ratio (D1/D2) and the setting of the exit angle for the stator blades 20 that satisfy such a demand will now be discussed.

Referring to Fig. 3, the torque ratio of the torque converter varies so as to take a maximum value as the torus inner-outer diameter ratio varies. To improve the performance of the torque converter, it is desirable that the torque ratio be as large as possible. Accordingly, the torus inner-outer diameter is a value included in a range of which the upper limit and lower limit are set near the value at which the torque ratio becomes maximal. In the present embodiment, such a range is referred to as an inner-outer diameter ratio setting range. The torus inner-outer diameter ratio is set by adjusting the torus inner diameter D1. In the present embodiment, the inner-outer diameter ratio range is, for example, "0.55 to 068" and the torus inner-outer diameter ratio is "0.67". A further preferable inner-outer diameter ratio range is "0.57 to 0.65". When using this inner-outer diameter ratio setting range, the torus inner-outer diameter ratio is set as a value included in the range.

After setting the torus inner-outer diameter ratio as described above, when decreasing the torus width L to lower the flatness rate (L/D2) of the torus 21, it becomes difficult to ensure the required capacity coefficient C. However, as shown in Fig. 4, for example, the exit angle θ of the stator blades 20 may be decreased to increase the capacity coefficient C. The exit angle θ may be decreased to increase the capacity coefficient C in the entire variation range (0 to 1) of the rotational speed ratio for the torque converter as shown in Fig. 5(b).

In the present embodiment, the capacity coefficient C is prevented from becoming small by using the above-described relationship of the exit angle θ and the capacity coefficient C to set the torus inner-outer diameter ratio and the exit angle θ in the following manner. In detail, under a situation in which the torus inner-outer diameter ratio is set as a value in the above inner-outer diameter ratio setting range, the exit angle θ is set as a value in an angle setting range, which is the range of the exit angle θ in which the capacity coefficient C is greater than or equal to the required level. By setting the exit angle θ in such a manner, the capacity coefficient C becomes greater than or equal to the required level. Further, the torque ratio, which is decreased by the setting of the exit angle θ, is compensated for by setting the torus inner-outer diameter ratio to a value in the above-described inner-outer diameter setting range. This ensures that sufficient torque is obtained. In the present embodiment, the angle setting range is "30° to 40°", and the exit angle is "36°". A further preferable angle setting range is "35° to 40°".

By setting the torus inner-outer diameter ratio of the torus 21 and the exit angle θ of the stator blades 20 as described above, without enlarging the torque converter (stator outer diameter D2), the capacity coefficient C becomes greater than or equal to the required level, while the torque ratio takes the maximum value or a value close to the maximum value. This allows for the torque converter to have improved performance, which includes the torque ratio and the capacity coefficient C.

The present embodiment, which has been discussed above in detail, has the advantages described below.
(1) Without enlarging the torque converter, the torque converter performance, which includes the torque ratio and the capacity coefficient C, is improved.
(2) The torque ratio becomes maximal when the torus inner-outer diameter ratio is in the range of 0.55 to 0.68. By setting the exit angle θ of the stator blades 20 in the range of 30° to 40° when the torus inner-outer diameter ratio is in the above range, the capacity coefficient C becomes greater than or equal to the required level. Accordingly, by setting the inner-outer diameter setting range as "0.55 to 0.68" and the angle setting range as "30° to 40°", the torque converter performance is improved without enlarging the torque converter.
(3) The torus 21 is a flat torus, the size of which is small in the direction the rotational axes of the impeller 4 and the turbine 9 extend. In a torque converter including a flat torus, it is difficult to ensure the required torque ratio and capacity coefficient. However, the torque converter of the present embodiment effectively ensures the required torque converter including the torque ratio and the capacity coefficient.
(4) When the ratio (L/D2) of the torus width L and the torus outer diameter D2 is 0.2 or less in the torus 21, the torque converter performance decreases. This may have adverse effects. However, even in such a torque converter, the required torque converter performance, which includes the torque ratio and the capacity coefficient, is effectively ensured.
(5) The lockup mechanism 12 is arranged between the turbine 9 and the front cover 3 in the fluid chamber 6. This restricts the space for arrangement of the impeller 4, the turbine 9, and the like in the axial direction of the torque converter. Further, the damper 13 of the lockup mechanism 12 bulges away from the front cover 3. Thus, the torus inner diameter D1 must be increased to avoid contact between the damper 13 and the turbine 9. This limits reduction of the torus inner diameter D1. As described above, the arrangement of the lockup mechanism reduces the thickness of the torus and increases the torus inner diameter. This makes it difficult to obtain the required torque converter performance, such as the torque ratio and the capacity coefficient. However, even under such a situation, the torque converter of the present embodiment effectively ensures the required torque converter performance including the torque ratio and the capacity coefficient.

The embodiment discussed above may be modified as described below.

The present invention may be applied to a torque converter that does not include a lockup mechanism 12.

The ratio (L/D2) of the torus width L and the torus outer diameter D2 may be a value other than "0.12" as long as it is 0.2 or less.

The above ratio (L/D2) may be a value that is greater than 0.2.

The torus inner-outer diameter ratio may be a value other than "0.67" in the inner-outer diameter ratio setting range.

The inner-outer diameter setting range may be "0.57 to 0.65".

The exit angle θ of the stator blades 20 may be a value other than "36°" in the angle setting range.

The angle setting range may be "35° to 40°".

## Claims

1. A torque converter comprising:
an impeller that receives torque and rotates about its axis;
a turbine coaxial with the impeller and arranged to be rotatable at a position facing toward the impeller;
a stator arranged between the impeller and the turbine and including a stator blade, which regulates the flow of fluid contained between the impeller and the turbine from the turbine to the impeller; and
a torus formed by the impeller, the turbine, and the stator, in which the fluid contained in the torus transmits torque between the impeller and the turbine, the torque converter being
**characterized in that:**
a torus inner outer-diameter ratio, which is the ratio of an inner diameter and an outer diameter of the torus, is set in a range of 0.55 to 0.68; and
an exit angle, which is an inclination angle of a portion of the stator blade facing toward the impeller relative to axes of the impeller and the turbine, is set in a range of 30° to 40°.

2. The torque converter according to claim 1, wherein a ratio of a width of the torus in a direction in which the axes of the impeller and the turbine extend and the outer diameter of the torus is 0.2 or less.

3. The torque converter according to claim 1 or 2, further comprising:
a cover that forms a fluid chamber in which the impeller, the turbine, and the stator are arranged; and
a lockup mechanism arranged in the fluid chamber that mechanically connects the impeller and the turbine.
